# EUROPEAN PATENT APPLICATION

(11) **EP 0 994 282 A2**
(43) Date of publication of application: **19.04.2000**
(21) Application number: 99830446.3
(22) Date of filing: 14.07.1999
(51) Int. Cl.: F16H 55/26

(54) **Rack sections for joining together, which can be hooked onto a support bar, both straight and curved**

(30) Priority: 16.10.1998 IT BS980077 U
(71) Applicant: Officina Stagnoli di Stagnoli Laurina, 25015 Desenzano del Garda (Brescia) (IT)
(72) Inventor: Albiero, Francesco, 25015 Desenzano del Garda (Brescia) (IT)
(74) Representative: Manzoni, Alessandro

(57) **Abstract**

The invention concerns a rack composed of one or more sections joined together (10), made in a plastic material and with a toothed part (11) on a base (12).

Each section for assembling has, on the base, several projections (13) for coupling and blocking with a bayonet movement in corresponding hook openings (17,18) in a metal support bar (14). The support bar is at least as long as the assembled section and represents a means of fixing the rack in place ready for use, by means of screws or by welding.

## Description

This invention refers in general to those racks that consist of toothed sections that can be joined together and, in particular, concerns the means of support and the use of said racks.

There is nothing new in racks consisting of several consecutive toothed sections in a suitable plastic material, such as nylon or similar, with a metal core. However, these racks cannot be fixed in place by welding or attached to curved supports.

The aim of this invention, however, is to propose and supply a rack with sections that can be joined together, where the sections can be rapidly and easily hooked onto a metal support bar, and this bar can be connected up to other bars and fixed in place for use, not only using screws but, as needs be, also by welding.

Another aim of this invention is to propose toothed rack sections in plastic material that can be hooked onto a support bar and held fast, without the use of tools and traditional fastening means and with the possibility of removing and replacing any section separately from those on either side.

Yet another aim of the invention is to propose toothed rack sections that can be hooked in the same way onto support bars, both straight and curved, according to whether the need is for linear or circular racks.

A further aim of the invention is to supply toothed rack sections for joining together that can be put on sale as they are and/or in assembly kits for the so-called DIY stores.

These aims have been met by this invention with a rack consisting of one or more toothed sections for joining together, made in a plastic material, where each section has several projections on the base for coupling and blocking it, bayonet-like, with corresponding hooks on a metal support bar, which is at least as long as the section.

Greater detail about the invention will become evident from the description below, which refers to the designs enclosed, where:
Fig. 1 shows the perspective of a rack section;
Fig. 2 shows a side view;
Fig. 3 shows a perspective of a support bar for the section in Fig. 1;
Fig. 4 shows the toothed section and support bar together;
Fig. 5 shows a cross-section of the assembled parts in Fig. 4; and
Figs 6 and 7 show two examples of an assembled rack, in linear and curved formation, respectively.

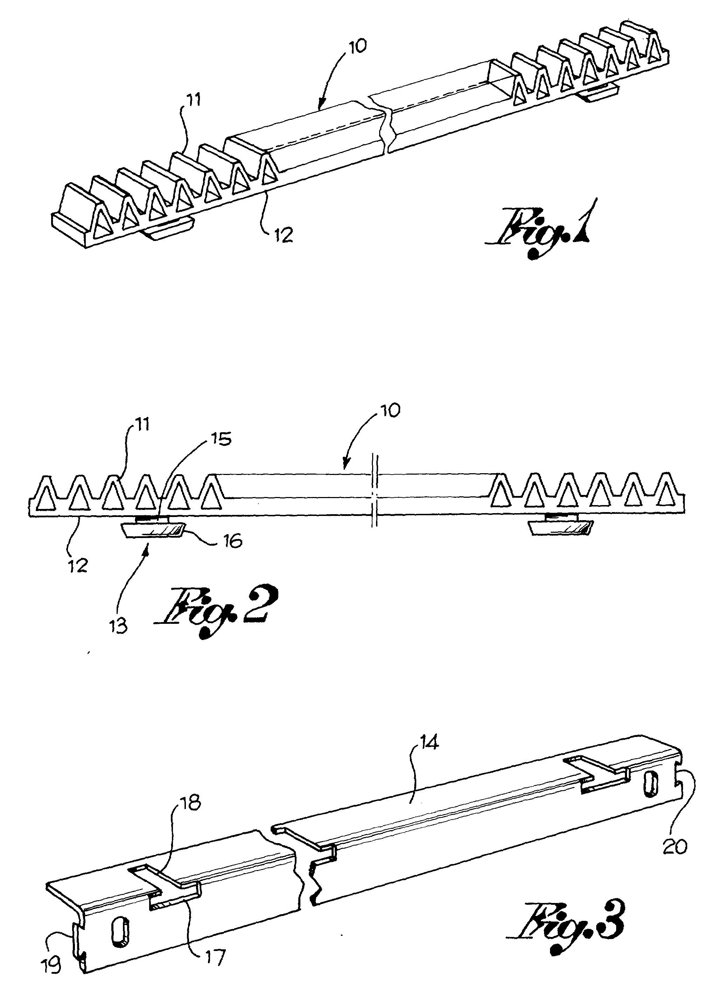

Figs 1 and 2 represent a section 10 of the rack, made in a suitable plastic material and with a toothed part 11 on a base 12. The length of the toothed section 10 is chosen according to the composition desired. Under the base, there are located some projections which serve as the means of hooking the toothed section onto a metal support bar 14, like that shown in Fig. 3. Each projection 13 consists of a shank 15 which protrudes from the base 12 and ends in a head 16 of greater dimensions.

The support bar 14 may be L-shaped in cross-section and, in order to hook onto the toothed section 10, it has the corresponding number of openings for the projections 13 on each section. Each opening on the support bar consists of a slit 17 through which the head 16 passes and of a cavity 18 for housing the shank 15 of a projection 13. In this way, the rack section 10 can be hooked onto and fastened to the support bar 14 with a bayonet action, as shown in Figs 4 and 5, above all, in such a way as to be removed and replaced without need of tools. The support bar is the means by which the rack can be fixed in place on the device where it is needed, either using screws or by welding.

The support bar 14 also features, at either end, fastening devices 19,20 for joining together several bars and, thereby, several consecutive toothed sections is such a way as to form a rack of the length desired.

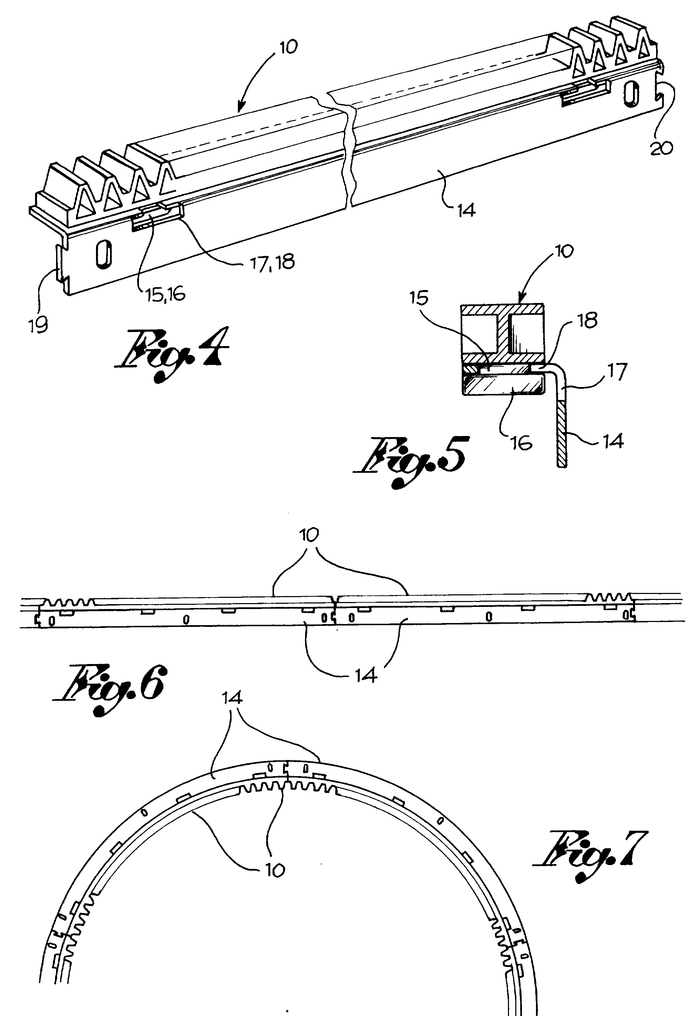

Using straight support bars means assembling linear racks, as shown in Fig. 6. Using curved support bars and exploiting the relative flexibility of each toothed section makes it possible to create curved racks, that is, with a circular movement, as shown in Fig. 7.

## Claims

1. Rack consisting of one or more sections joined together (10), made in plastic material and having a toothed part (11) on a base (12), characterised by the fact that each assembled section has, on its base, several projections (13) for coupling and fastening it, with a bayonet movement, in corresponding hook openings (17,18) to be found on the metal support bar (14), said support bar being of at least the same length as the assembled section and constituting a means of fixing the rack in place for use, either using screws or by welding.

2. Rack according to revendication 1, in which each projection (13) of the assembled section (10) has a shank (15) protruding from the base (11) of the section and ending in an enlarged head (16), and in which each hook opening in the support bar (14) has a slit (17) for passing through the head (16) and a cavity (18) for housing and blocking the shank (15) of the projection.

3. Rack according to revendications 1 and 2, in which the support bar (14) has fastening devices (19,20) at either end for connecting other bars and, consequently, other toothed sections (10) joined together consecutively.

4. Rack according to the preceding revendications, in which the assembled toothed section and support bar are straight, in order to form linear racks.

5. Rack according to revendications 1-3, in which the assembled toothed section and support bar are curved in order to form curved racks, that is, with a circular movement.

6. A toothed section for assembling into linear or curved racks, characterised by the fact that they have protrusions or projections (13) from the base which couple with and hold fast in corresponding openings (17,18) in a straight or curved support bar (14), said bar acting as a means for fixing the assembled section in place.
